# EUROPEAN PATENT APPLICATION

(11) **EP 2 077 238 A1**
(43) Date of publication of application: **08.07.2009**
(21) Application number: 07827946.0
(22) Date of filing: 25.10.2007
(51) Int. Cl.: B65D 65/40, B32B 27/10, B32B 27/30

(54) **LAMINATED PAPER PACKAGING MATERIAL AND METHOD OF PRODUCING THE SAME**

(30) Priority: 25.10.2006 JP 2006290572
(71) Applicant: Tetra Laval Holdings & Finance SA, 1009 Pully (CH)
(72) Inventor: OGITA, Hiroaki, Tokyo 1028544 (JP); KOBAYASHI, Norio, Tokyo 1028544 (JP); ONO, Kazuya, Tokyo 1028544 (JP)
(74) Representative: Bauer, Clemens
(86) International application number: PCT/JP2007/001167
(87) International publication number: WO 2008/050486

(57) **Abstract**

To provide a laminated packaging material wherein a plant-origin material is used as the main material constituting a laminated paper packaging material for foods; a laminated packaging material being excellent in oxygen-barrier performance; a method of producing a barrier laminated packaging material in a small number of steps; a method of producing a barrier laminated packaging material whereby the structure of the laminate can be simplified without a need for a petroleum-derived adhesive and the laminate thickness can be reduced; and a method of producing a barrier laminated packaging material which is free from the occurrence of defects such as pinholes in spite of having a thin barrier layer.

[MEANS FOR SOLVING PROBLEMS]

A laminated packaging material for foods which is a laminated packaging material comprising a paper core layer, a barrier layer and a thermoplastic resin layer, wherein the barrier layer is made of polyvinyl alcohol, while the thermoplastic resin layer is made of a resin composition containing a plant-origin plastic and having melt extrudability.

## Description

### [Field of the Invention]

This invention relates to a laminated packaging material for food having paper core layer, barrier layer and material of a plant origin and the manufacturing method.

### [Background art]

A packaging paper container keeping drinks such as milk, juice, and mineral water is provided from the web-shaped laminated packaging material with crease lines and printed outside designs.
At first the web-shaped laminated packaging material is formed as tube shape by a longitudinal seal in the longitudinal direction to produce the packaging paper containers. Liquid food is filled up in the tube-shaped packaging material. The tube-shaped packaging material is transversal sealed in the crossing direction, and is cut. The packaging material is folded along a crease line an occasion, and is formed as final shape. The final shape includes brick-shape, and tetrahedral shape.

When barrier performance is required, the laminated packaging material usually has a thermoplastic innermost layer (a polyethylene resin layer), an aluminum foil layer, a paper core layer of the barrier layer and a polyethylene resin outermost layer. The oxygen barrier layers except aluminum foil include a plastic film having inorganic vapor deposited layer, the monolayer laminated with ethylene vinyl alcohol copolymer (EVOH) or MXD6 nylon of oxygen barrier resin, multilayer laminated with the barrier resin film or with coextrusion of above-mentioned resins. The usual methods of laminating the oxygen barrier layer include methods of laminating a film of barrier resin on the core layer with adhesive, a method of extruding melted barrier resin on the core layer surface, and laminating them.

Paper of the core layer is the typical plant derived material. However, other laminated materials, for instance, a lot of a thermoplastic (polyethylene resin) and oxygen barrier-related resin are oil-derived materials. For the environmental load reduction, more use of the plant-derived (plant-origin) material is expected.

As the plastics (biomass polymer) polymerized from plant-derived raw materials monomer, polylactic acid (PLA), polyglycolic acid, poly succinic acid (PAS), poly butyric acid (PBA) are known. Because the biomass polymer is the plant derived raw materials, the biomass polymer is biodegradable inherently. Because the biomass polymer is the plant derived raw materials, the biomass polymer is biodegradable inherent
The packaging material with plastics polymerized from plant derived raw material monomer includes biodegradable material, and the packaging container coated polylactic acid or its derivative on the surface of plant fiber containing base (JP 2513091 B), film for food packaging comprising a plasticizer having two carboxylate groups and polylactic acid, having 50-300 g/m² 24hr of steam transmittance, and 10-500 µm of thickness (JP 3178692 B), a degradable container comprising of aliphatic polyester obtained from aliphatic polyalcohol, aliphatic polybasic acid (e.g. succinic acid) or hydroxy-carboxylic acid with condensation reaction (JP 3360762 B).

[Patent document 1] JP-2003-508274-W
[Patent document 2] JP 2513091 B
[Patent document 3] JP 3178692 B
[Patent document 4] JP 3360762 B

### [Disclosure of invention]

### [Problems to be solved by the Invention]

An object of the present invention is to provide a laminated packaging material with the plant derived material as main constitution material of a paper laminated packaging material for food, a biodegradable laminated packaging material being superior in oxygen barrier, a method of manufacturing a barrier laminated packaging materials with simple process steps, a method of manufacturing a barrier laminated packaging materials which can simplify laminate structure, which does not need any oil derived adhesive, which can thin the thickness of the laminate, a method of manufacturing a barrier laminated packaging material with no generation of defects such as pinholes even if the barrier layer is thin.

### [Means to solve the Problem]

A laminated packaging material for food of this invention to solve this problem is a laminated packaging material comprising a paper core layer, a barrier layer and a thermoplastic resin layer characterized by that the barrier layer comprises polyvinyl alcohol, the thermoplastic resin layer comprises a resin composition containing plant derived plastic material, and having an ability of melt extrusion.

In preferable embodiment of this invention, the barrier layer comprises polyvinyl alcohol and a fine lamella silicate, for instance, fine inorganic flake-shaped compound or clay mineral.

In preferable embodiment of this invention, the resin composition of the thermoplastic resin layer has an average density of 0.910 - 0.925, melt flow rate (MFR) of 3-15 and swelling ratio (SR) of 1.55-1.75.

In preferable embodiment of this invention, the resin composition of the thermoplastic resin layer comprises high MFR plant derived plastic material having an average density of 0.910 - 0.925 and melt flow ratio (MFR) of 5-20 and high SR plant derived plastic material having an average density of 0.910-0.925 and swelling ratio (SR) of 1.55-1.75.

In preferable embodiment of this invention, the resin composition of the thermoplastic resin layer comprises a biodegradable plasticizer, and has average density of 0.910-0.925, melt flow ratio (MFR) of 3-15 and swelling ratios (SR) of 1.55-1.75.

A method of manufacturing a laminated packaging material of this invention to solve this problem which comprises the steps of applying barrier resin liquid including a dispersion liquid or a solution of a barrier resin to a paper core layer as barrier layer, drying the barrier layer, removing a dispersing agent or solvent of the barrier resin liquid, and extruding the resin composition including a plant derived plastic material on the dried barrier layer surface to form the thermoplastic resin layer.

In preferable embodiment of this invention, barrier resin is polyvinyl alcohol.

### [Effects of Invention]

According to this above-mentioned invention, the following advantageous effect is provided.
In this invention, the paper laminated packaging material is the laminated packaging material comprising the paper core layer, the barrier layer and thermoplastic resin layer, wherein the barrier layer comprises polyvinyl alcohol, the thermoplastic resin layer comprises the resin composition comprising the plant derived plastic material, and having the ability of melting extrusion. The plant-derived material can be used as the main constitution material.

Polyvinyl alcohol of the barrier layer laminated with the thermoplastic resin layer on the paper core layer has a superior oxygen barrier performance. More superior oxygen barrier performance can be shown by adding fine lamella silicate, namely, fine inorganic flake-shaped compound or clay mineral, so-called nano-Cray into the polyvinyl alcohol. Because resin composition of thermoplastic resin layer has the average density, the melt flow ratio (MFR) and swelling ratio (SR) to be superior in extrusion processing, the laminated packaging materials may be manufactured with excellent performance on draw down and neck-in, as well as at high speed.

In the manufacturing method of the laminated packaging material, by applying the barrier resin liquid on the paper core layer as barrier layer, drying the barrier layer, and extruding the plant derived plastic material to form the thermoplastic resin layer, the barrier laminated packaging materials can be manufactured with simple process steps, In addition, the method of manufacturing a barrier laminated packaging materials can simplify laminate structure, the method does not need any oil derived adhesive, and the method can thin the thickness of the laminate, Moreover, a method of manufacturing a barrier laminated packaging material does not generate defects such as pinholes even if the barrier layer is thin.

### [Best mode to carry out invention]

The following embodiments illustrate the practice of the invention.
The laminated packaging material comprises the paper core layer, the barrier layer and the thermoplastic resin layer. The barrier layer comprises polyvinyl alcohol. The thermoplastic resin layer comprises a resin composition containing plant derived plastic material, and having an ability of melt extrusion. The thermoplastic resin layer comprises a resin composition containing plant derived plastic material, and ha

The core layer comprises paper substrate in this invention.
The paper board used as the paper substrate in this invention is a paper board used as raw material of the packaging material generally. The paper board having 400 g/m² - 150 g/m² of basis weight (weight per unit area) can be used. Moreover, a tissue paper such as glassine paper having 150 g/m² - 30 g/m² can be used and then the paper can be laminated on paper substrate, and resin substrate such as sheet or film.
As to materials of the paper, a clay-coated paper having an improved surface flatness may be used. At the paper processing, surface treatments such as corona treatment or flame treatment is generally done. Such above-mentioned surface treatment may be used in the processing of this invention, if necessary.

The barrier layer comprises polyvinyl alcohol in this invention, or polyvinyl alcohol resin. The polyvinyl alcohol resin is the resin obtained by saponification of the vinyl group of the polymer obtained by homo- or copolymerization of ethyl acetate. The polyvinyl alcohol resin is the water-soluble resin obtained by the saponification to hydroxyl group from vinyl group of the poly-vinyl acetate obtained from polymerization of vinyl acetate monomer. There is a lot of different grades on polymerization degrees and saponification ratios. Various degenerations for the real polymer are done to adjust the physical property and the workability as well as the adjustment of the polymerization degree and the saponification ratio. Polyvinyl alcohol resin having the polymerization degree of 500-2500, 69.5 - 99.85 mol % of saponification ratio can be used.

In preferable embodiment of this invention, the barrier layer comprises the polyvinyl alcohol and the fine lamella silicate dispersed uniformly in the polyvinyl alcohol.
Preferably, in the barrier layer, average particle size is in range of 1-80 micron, and the lamella silicate without big particle size more than 300 micron contains 0.1-10 % by weight, the lamella silicate disperses uniformly at more substantially than 50A of the interlayer distance. For example, the resin for barrier layer may be prepared in polymerization process by diffusing clay mineral in the monomer, and polymerizing them. From the process, the silicate scintilla plate dispersed in extremely small structure and the polymer may be generated.

The raw materials of the lamella silicate include, for instance, lamellar phyllosilicate mineral consisting of layers of magnesium silicate or aluminum silicate. The blending quantity of the lamella silicate is, preferably 0.05-15 % by weight for the polymer, and more preferably 0.1-10 % by weight.
In preferable embodiment, a lamella silicate (clay mineral) having metal ion (for example, the metal ion selected among Ag, Zn, Co, Cd, Cu) except Na, K, Li and Ca, or the metal compound between the layers can be used. The lamella silicate in itself keeps superior antibacterial against various kinds of microorganism such as Pseudomonas, colon bacillus, Staphylococcus aureus. Therefore, the laminated packaging material containing the lamella silicate has antibacterial.

The thermoplastic resin layer of this invention comprises the plant derived plastic material, and has an ability of melt extrusion. The plant derived plastic material used for the thermoplastic resin layer in this invention includes polylactic acid (PLA), polyglycolic acid, poly succinic acid (PAS), and poly butyric acid (PBA). In this invention, the resin composition has the ability of the melting extrusion.
For instance, the resin composition of the thermoplastic resin layer has the average density of 0.910-0.925, the melt flow ratio (MFR) of 3-15, and the swelling ratios (SR) of 1.55-1.75.

In order to change the thermoplastic resin to the resin having an ability of melting extrusion, firstly, a polymer is designed so that the plant derived plastic material in itself can have the ability, secondly, a blend is designed with more than two kinds of the plant derived plastic material so that the blend can have the ability, and thirdly, a modifying agent is added into the plant derived plastic material so that the plastic can have the ability.

In the second method of the preferable embodiment, the resin composition of the thermoplastic resin layer is a blend with high MFR plant derived plastic material having average density of 0.910-0.925 and melt flow ratio (MFR) of 5-20, and high SR plant derived plastic material having average density of 0.910-0.925 and swelling ratios (SR) of 1.55-1.75.

In the third method of the preferable embodiment, the resin composition of the thermoplastic resin layer contains the biodegradable plasticizer, for example, rosin and has average density of 0.910-0.925, melt flow ratio (MFR) of 3-15 and swelling ratios (SR) of 1.55-1.75.

In the invention, when extrusion performance (draw down, neck in) is evaluated, important parameters are MFR, SR, density. MFR (Melt Flow Rate (Ratio)) is numerical value when samples are pushed out of a nozzle of the diameter of 2mm at 190 degrees C, under load of 2.16kg for 10 minutes, A material having high numerical value shows high flow-ability (draw down in extrusion processing (high speed workability)). In addition, SR (Swelling Ratio) is a swelling of the strand when samples are pushed out of a nozzle of the diameter of 2mm at 190 degrees C, under load of 2.16kg for 10 minutes in the MFR measurement. When the numerical value exceeds one, it shows swelling, it has less than one, it shows shrinking.

The method of manufacturing a laminated packaging material of this invention comprises the steps of applying the barrier resin liquid including the dispersion liquid or the solution of the barrier resin of polyvinyl alcohol on the paper core layer as the barrier layer, drying the barrier layer to remove the dispersing agent or solvent of the barrier resin liquid, and extruding the resin composition including the plant derived plastic material on the dried barrier layer surface to form the thermoplastic resin layer.

The barrier resin liquid can be prepared by the dispersion of the barrier resin into the dispersing agent or by the dissolution of the barrier resin into the solvent.
In the preferable embodiment of this invention, the dispersing agent and the solvent are aqueous. The applying liquid (the barrier resin liquid) consists of the polyvinyl alcohol resin dissolved/dispersed in water or solvent mixture of water and alcohol. Since any harmfulness organic solvent is not volatilized in the drying step, the method is good from viewpoints of environment and safety.
In this invention, various kinds of an inorganic or organic substance can be added into the solution / the dispersant to improve the workability and the coat properties, if necessary. In addition, the applying liquid is not limited to as above to include dispersed or emulsified liquid, and solution of other solvents with the resin.

The applying method may include, as usual printing methods, spray coating of the solution / the dispersed liquid, the screen-printing or/and the photogravure printing. Using a copying method with a gravure roll provides with good continuous process efficacy. The thin solution / dispersion liquid is copied in the copying roll, and the resin is copied to the paper substrate by the contact of the roll to the paper substrate surface. The applied materials are introduced into a heat-drying furnace sequentially to be dried. For example, the weight after dried of the barrier resin liquid of applied polyvinyl alcohol resin is less than 10g/m² more than 0.5g/m².

In the extrusion step in this invention, the thermoplastic resin is extruded on the dried barrier layer surface, and the thermoplastic resin layer (the innermost layer and the outermost layer) is formed. For instance, a web laminated packaging material with the core layer having barrier layers is obtained by simultaneously laminating the extrudable thermoplastic resin on both outside surfaces of the web with an extruder, and nipping the web with two rollers. Generally, polyethylene is coated on both outer surfaces of a paper substrate to keep waterproof and heat sealing in the paper converting packaging material. In this invention, paper substrate of the core layer coated with polyethylene on a surface of the core layer opposite to the barrier layer can be used.
In the extrusion step, the resin is extruded on the paper substrate as the usual extrusion processing. Surface treatment of corona treatment and the like to paper substrate may be done if necessary.

### <Examples>

Example 1 The water-soluble solution of the barrier resin of 2 wt % smectite containing polyvinyl alcohol of 2g/m² in dry weight is applied to six kinds of bleached raw paper for milk paper carton (basis weight about 310g /m²), and dried.
After the applying and the drying, oxygen permeation under conditions of 23 degrees Celsius, 0% RH is measured. Oxygen permeations are 610cc/m2.day.atm - 6010 cc/m².day.atm for the above-mentioned samples 1-6.

### (Oxygen Barrier Evaluation)

The oxygen barrier of the sample materials are evaluated in accordance with JIS K-7126.
They are measured with, for instance, an oxygen permeation measuring apparatus. Since oxygen barrier of resin barrier materials different from aluminum foil barrier layer have dependency to humidity and humidity, the measurement condition should be changed if necessary. Generally, since the container made of material having oxygen transmission rate of less than 50cc/m².day.atm has useful oxygen permeability, 50cc/m².day.atm in this invention is used as criteria of the oxygen barrier performance.

Therefore, barrier performance cannot be got only by only applying and drying of the barrier resin liquid from above result.
Subsequently, the blend (density of 0.924g/cm³, MFR 10, SR 1.6) of polylactic acid and aliphatic aromatic poly ester of a modifying agent in 15g/m2 is extruded and is laminated on the barrier layer. For the obtained samples, the oxygen permeation are measured under the condition of 23 degrees Celsius and 90% RH. Every oxygen permeation is less than 50cc/m².day.atm, and has good barrier performance.

### Comparative Example 1

Packaging materials are obtained same as Example 1, except that low density polyethylene of 20g /m² is extruded on bleached raw paper of milk paper carton without applying of the barrier resin aqueous solution. The obtained material does not show good barrier performance.

The present invention is not limited to the above embodiments but may be embodied in other various forms without departing from the spirit thereof and such variations are not excluded from the scope of the present invention.

### [Industrial applicability]

A laminated packaging material and the manufacturing method of this invention can be applied to packaging containers such as milk, juice, drink of mineral water, liquid food and the like.

## Claims

1. A laminated packaging material for foods comprising a paper core layer, a barrier layer and a thermoplastic resin layer, **characterized by** that the barrier layer comprises polyvinyl alcohol, the thermoplastic resin layer comprises a resin composition comprising a plant derived plastic material, and having the ability of melting extrusion.

2. A laminated packaging material for food according to claim 1, in which the barrier layer comprises polyvinyl alcohol and a fine lamella silicate, for instance, fine inorganic flake-shaped compound or clay mineral.

3. A laminated packaging material for food according to claim 1, in which the resin composition of the thermoplastic resin layer has an average density of 0.910-0.925, melt flow rate (MFR) of 3-15 and swelling ratio (SR) of 1.55-1.75.

4. A laminated packaging material for food according to claim 1, in which the resin composition of the thermoplastic resin layer comprises high MFR plant derived plastic material having an average density of 0.910-0.925 and melt flow ratio (MFR) of 5-20 and high SR plant derived plastic material having an average density of 0.910-0.925 and swelling ratio (SR) of 1.55-1.75.

5. A laminated packaging material for food according to claim 1, in which the resin composition of the thermoplastic resin layer comprises a biodegradable plasticizer, and has 0.910-0.925 of average density, melt flow ratio (MFR) of 3-15 and swelling ratios (SR) of 1.55-1.75.

6. A method of manufacturing a laminated packaging material comprises the steps of >A method of manufacturing a laminated packaging material comp applying barrier resin liquid including a dispersion liquid or a solution of a barrier resin to a paper core layer as barrier layer, drying the barrier layer, removing a dispersing agent or solvent of the barrier resin liquid, and extruding the resin composition including a plant derived plastic material on the dried barrier layer surface to form the thermoplastic resin layer.

7. A method of manufacturing a laminated packaging material according to claim 6, in which the barrier resin liquid comprises polyvinyl alcohol and a fine lamella silicate.

8. A method of manufacturing a laminated packaging material according to claim 6, in which apply the barrier resin liquid is applied to the core layer directly.
